# EUROPÄISCHE PATENTSCHRIFT

(11) **EP 0 613 516 B1**
(45) Veröffentlichungstag und Bekanntmachung des Hinweises auf die Patenterteilung: **17.07.1996**
(21) Anmeldenummer: 92923398.9
(22) Anmeldetag: 17.11.1992
(51) Int. Cl.: F01C 11/00

(54) **Mehrkammerrotationskolbenbrennkraftmaschine**
Multi-chamber rotary piston internal combustion engine
Moteur à combustion interne, à pistons rotatifs et à chambres multiples

(30) Priorität: 21.11.1991 DE 4138204
(43) Veröffentlichungstag der Anmeldung: 07.09.1994
(73) Patentinhaber: FRIEDRICH, Werner E., 67141 Neuhofen (DE)
(72) Erfinder: FRIEDRICH, Werner E., 67141 Neuhofen (DE)
(74) Vertreter: Meyer-Roedern, Giso, Dr.
(86) Internationale Anmeldenummer: DE9200957
(87) Internationale Veröffentlichungsnummer: WO9310332

(56) Entgegenhaltungen:
- DE-A- 2 838 000
- FR-A- 2 105 695
- US-A- 4 170 978
- US-A- 4 658 779
- PATENT ABSTRACTS OF JAPAN vol. 7, no. 59 (M-199)(1204) 11. März 1983 & JP-A.57 203 802 (SADAJI SASAKI) 14. Dezember 1982

## Beschreibung

Im Gegensatz zur erfindungsgemäßen Mehrkammerrotationskolbenbrennkraftmaschine arbeiten heute die meisten Verbrennungsmotoren als Kolbenmaschinen zwischen festen Volumengrenzen, die es nicht ermöglichen, das Arbeitsgas im Zylinder während des Expansionshubes auf Umgebungsdruck zu entspannen.

Die in den Abgasen noch enthaltene kinetische und Wärmeenergie wird inzwischen durch immer weiter entwickelte Techniken genutzt zur Verbesserung der Energiebilanz solcher Verbrennungsmotoren. So hat z.B. die Abgasturboladertechnik große Bedeutung erlangt.

Darüberhinaus werden Verbesserungen erreicht durch genauere Dosierungen der Kraftstoffzufuhr mittels Einspritzpumpen sowie Verbesserung der Luftzufuhr durch die Luftkompressionstechnik. Die Erhöhung der Anzahl der Einund Auslaßventile für den Gaswechsel trägt ebenfalls zur Steigerung des Wirkungsgrades dieser Motoren bei.

Die Struktur der heutigen Kolbenmotoren wird jedoch die Optimierung der Energiebilanz immer an Grenzen stoßen lassen. Die ungenutzte Abgabe eines hohen Prozentsatzes der im Kraftstoff enthaltenen Energie an die Umgebung ist mit dieser Technik nicht zu vermeiden.

Die Entwicklung von Kreiskolbenmotoren hat bisher ebenfalls nicht zu Lösungen geführt, die überzeugende Vorteile gegenüber den bisherigen Konzepten gebracht haben und sich im Markt durchsetzen konnten.

Das bekannteste Ergebnis daraus ist der Wankel-Motor. Jedoch bietet auch er keine durchschlagende Verbesserung in Bezug auf Energieausbeute und Umweltbelastung. Seine derzeitige Marktbedeutung ist praktisch zu vernachlässigen.

Die Idee einer Mehrkammermaschine, in der alle Motorfunktionen während einer Umdrehung gleichzeitig nebeneinander ablaufen, verfolgen mit unterschiedlichen technischen Lösungen auch die Patentanmeldungen DE 2838000 und US 4170978 sowie die FR 2.105.695, JP 57203802 und die US 4658779. Bei diesen Konzepten handelt es sich jedoch ausschließlich um innen laufende Kolben- und Zylindereinheiten, die sich in praktisch allen wesentlichen Teilen von den technischen Lösungen der hier vorgestellten Mehrkammerrotationskolbenbrennkraftmaschine unterscheiden. Offensichtlich konnte mit deren technischen Vorschlägen bisher ebenfalls kein Markterfolg erzielt werden.

Der mit der vorliegenden Anmeldung vorgestellte Mehrkammermotor mit zwei spezifischen Funktionseinheiten ist neu: Einerseits innen laufende Zylinder- und Kolbenkombinationen für die Funktionen Ansaugen, Vorkompression und Endkompression korrespondieren mit andererseits außen rotierenden Zylinder- und Kolbeneinheiten für die Funktionen Verbrennung, Expansion und Gasausstoß.

Es bleibt festzustellen, daß die heutigen Verbrennungsmotoren mit Energieausbeuten unter 50% im Hinblick auf die immer knapper werdenden Rohstoffvorräte der Welt eine enorme Verschwendung dieser Rohstoffe bedeuten. Technische Lösungen zur Verbesserung der Energiebilanz der herkömmlichen Motortechnik sind offensichtlich nur eingeschränkt und mit erheblichem Aufwand möglich.

Der Erfindung liegt die Aufgabe zugrunde, ein Konzept eines Verbrennungsmotors aufzuzeigen, das die technischen Voraussetzungen für eine bessere Energieausbeute bietet und die Umwelt weniger belastet als bisherige Brennkraftmaschinen.

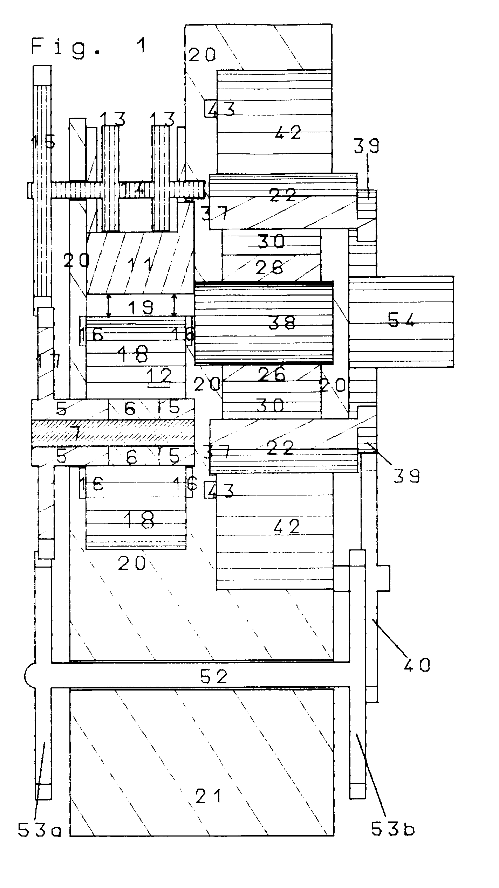

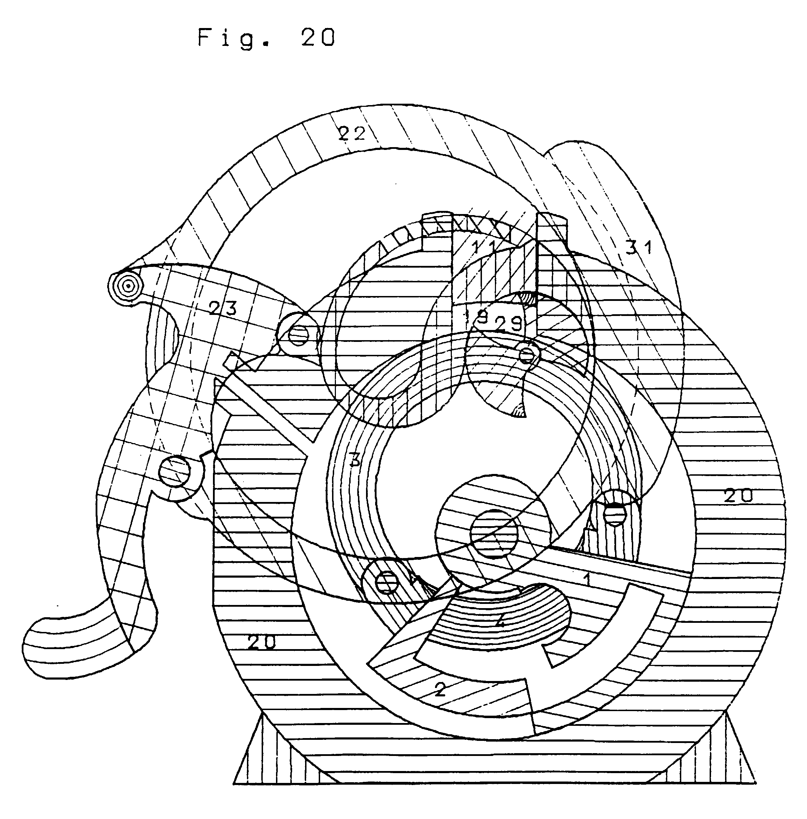

Diese Aufgabe wird erfindungsgemäß durch die im Patentanspruch 1 angegebenen Merkmale gelöst, nämlich durch eine Mehrkammerrotationskolbenbrennkraftmaschine (Abb.1) mit mehreren nacheinander angelegten Kammern (18a und b, 19, 29, 30a und b, 27), in denen die Motorfunktionen Ansaugen, Vorkompression, Endkompression, Zündung, Verbrennung, Expansion und Gasentleerung während einer Umdrehung gleichzeitig nebeneinander ablaufen, wobei der Gasfluß durch die einzelnen Kammern rotationssymmetrisch in der Logik dieser Maschine über eine zentrale Zahnradwelle (52) durch Zahnradübersetzungen (53a+b, 40, 17, 15, 39) und durch in/um den/die Kammern rotierende Zylinder und Kolben kontrolliert gesteuert wird. (Figuren 1 bis 19).

### Konstruktive Beschreibung und Arbeitsweise der erfindungsgemäßen Maschine

### Ansaugen / Vorkompression

In der durch die Motorgehäusewand (20) bestimmten Zylinderbuchse (18) werden auf zwei zueinander versetzten Achsen zwei Rotationskolben (1+2) auf der einen und mit diesen Kolben durch die Zylindergleitschuhe (8 + 9) beweglich verbunden der Rotationszylinder (3) als Innenläufer auf der anderen Achse bewegt. Der Vorkompressionsrotationskolben I (1) sitzt fest auf einer Welle (5), die durch den Kolbenwellenbolzen (7) im Zentrum der von der Motorgehäusewand (20) umschlossenen Zylinderbuchse (18) gehalten wird. Auf dem gleichen Achsbolzen (7) mit der Achse (6) läuft der Vorkompressionskolben II (2) als Mitläufer von Vorkompressionskolben I (1). (Abb. 2 und 3, Fig. 2 bis 9). In den flachen Seitenwänden der Vorkompressionszylinderbuchse (18) bieten Laufrinnen (16) den Flanschen (4) des Vorkompressionsrotationszylinders (3) ein Rundlaufbett. Die Achse des Vorkompressionsrotationszylinders (3) liegt auf dem Durchmesser der Vorkompressionszylinderbuchse (18), sein Durchmesser ist kleiner als jener der Zylinderbuchse (18).

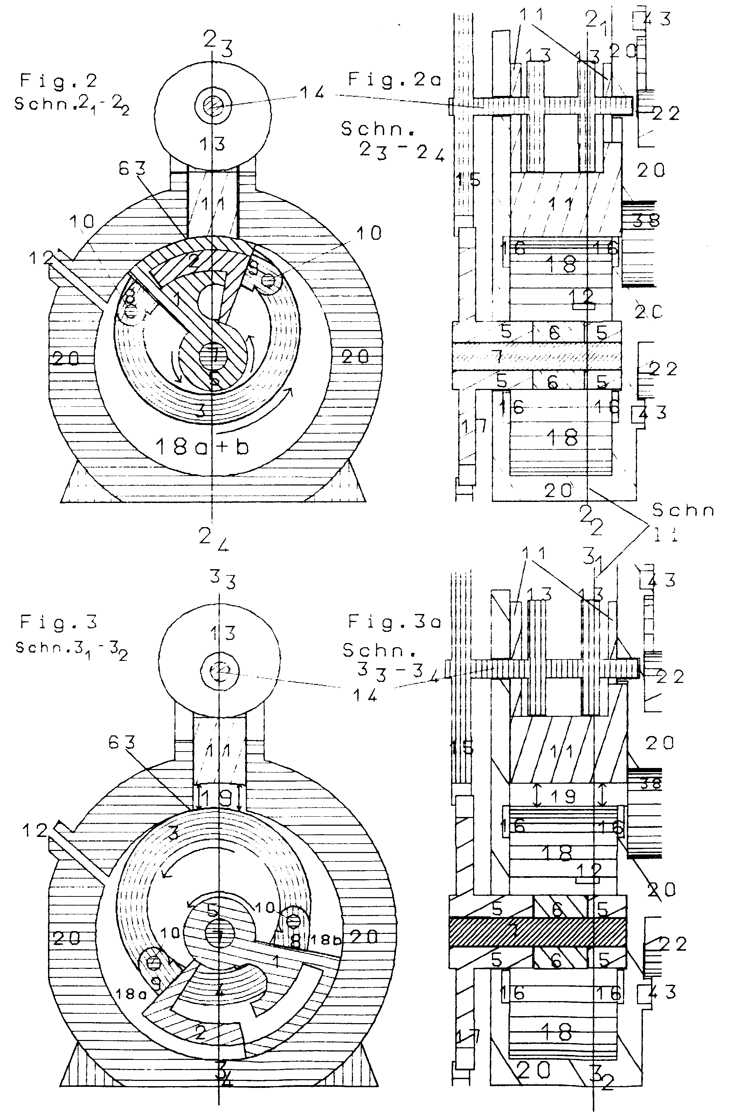

Am Scheitelpunkt (63) auf der Eckkante von Vorkompressionszylinderbuchse (18) und Zylinderwand des Kompressionskolbens (11) dichtet der Rotatationszylinder (3) das vorkomprimierte Gemisch (18b) gegen das angesaugte Frischgas im Raum (18a) ab. Zur gegenüberliegenden Rundung der Zylinderbuchse (18) hin bildet er die sichelförmige Vorkompressionskammer (18a+b).(Fig. 2 - 8).

Die durch Achsbolzen (10) beweglich am Innenzylinder (3) fixierten Gleitschuhe (8 + 9) erlauben während der Kolben- und Zylinderumdrehungen ein Auf- und Abgleiten der Zylinderenden auf den Kolbenstirnflächen. Während einer Umdrehung bewegen sich die beiden Kolben (1+2) zueinander vergleichbar dem Öffnen und Schließen einer Schere und gleichen so ihre unterschiedlichen Winkelstellungen zum Innenzylinder (3) während der Umdrehung aus. Bei jeder Umdrehung bilden der rotierende Vorkompressionskolben I (1) und sein mitlaufender Kolben II (2) zwei sich in ihrem Volumen ständig verändernde Kammern (18a+b) derart, daß zwischen der Stirnseite des Kolbens I (1) und den Wänden der Zylinderbuchse (18) und des Rotationszylinder (3) die Vorkompressionskammer (18b) bis auf Null verkleinert wird und zwischen der rückwärtigen Stirnseite von Kolben II (2) und den Wänden von Zylinderbuchse (18) und Rotationszylinder (3) die Ansaugkammer (18a) von Null bis zu ihrem vollen Volumen vergrößert wird.

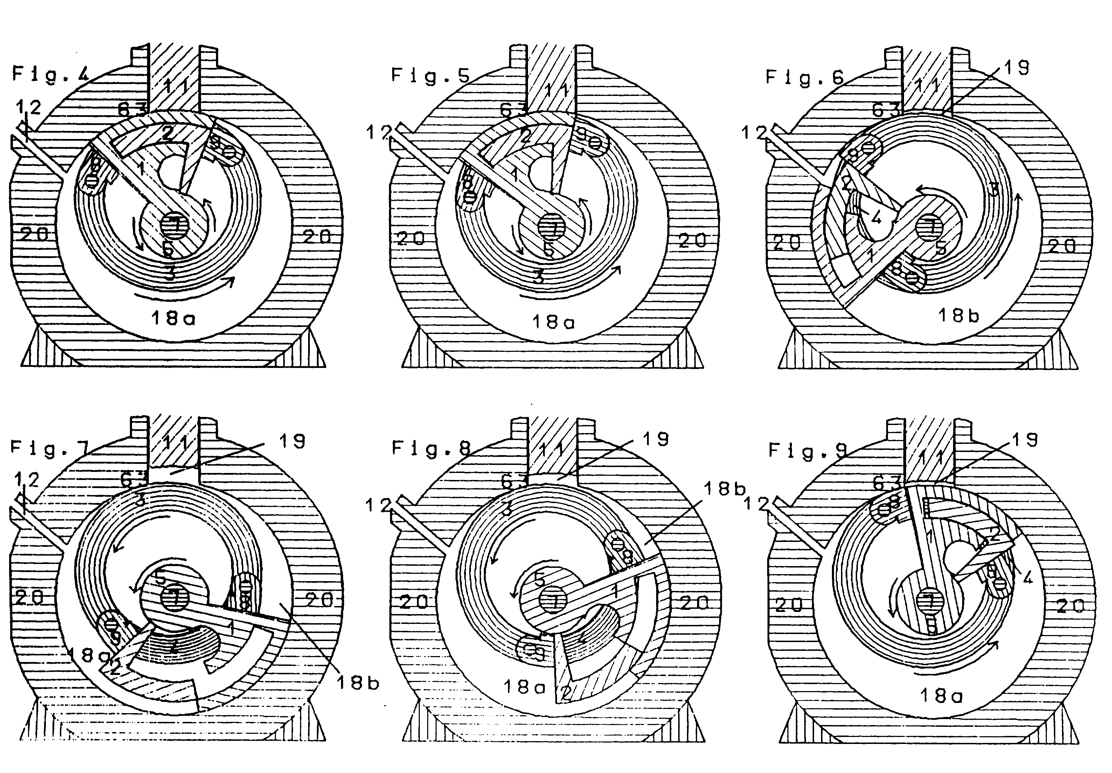

Die ABB. 2 in den Figuren 2 - 2a und 3 - 3a sowie die ABB. 3 mit den Figuren 4 bis 9 zeigen Funktion und Ablauf einer Umdrehung dieser bewegten Teile bei der Vorkompression.

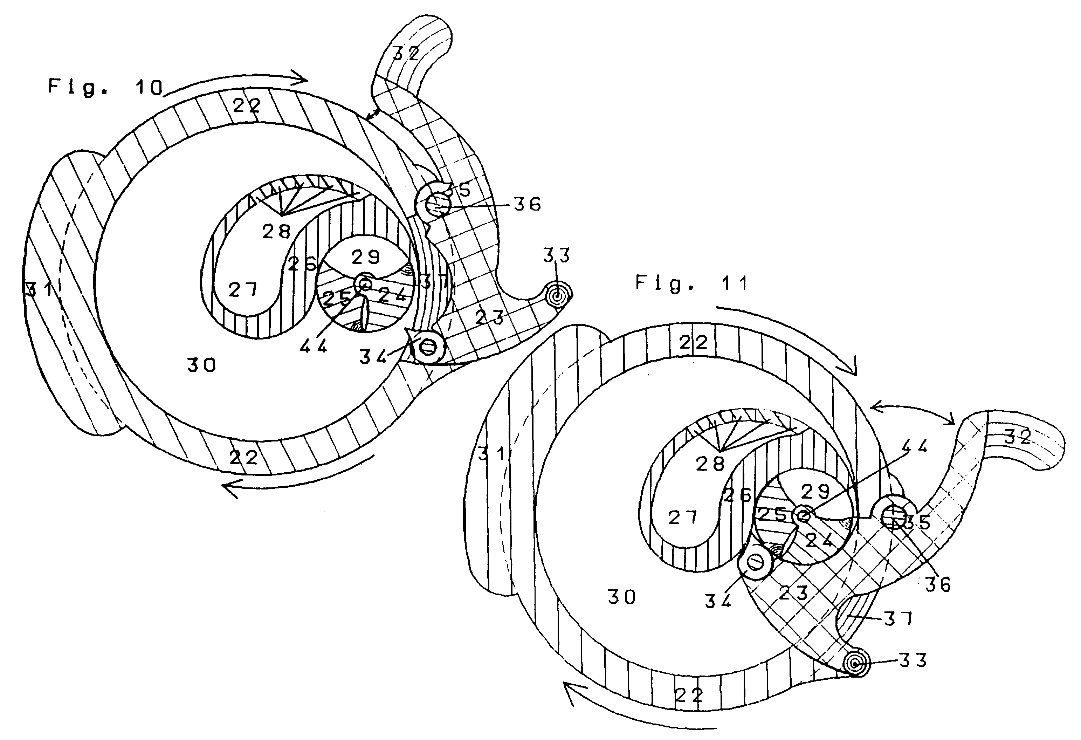

In Fig. 4 wurde der Vorkompressionszylinderraum (18a) durch die Brennstoffeinlaßöffnung (12) mit Frischgas gefüllt. Die Drehbewegung des Vorkompressionskolbens I (1) entgegen dem Uhrzeiger vorverdichtet das Gasgemisch, bis es gemäß Stellung in Fig. 9 die höchste Vorverdichtung erhalten hat. Damit ist im Vorkompressionszylinderraum (18) der Vorgang der Gasbefüllung und Vorkompression abgeschlossen und der gleiche Vorgang wiederholt sich beim Weiterdrehen des Vorkompressionskolbens I (1) entgegen dem Uhrzeigersinn.

### Endkompression

Durch das vorkomprimierte Gemisch infolge der Bewegung von Vorkompressionskolben I (1) gemäß Stellungen wie in den Figuren 6 bis 9 wird der Kompressionskolben (11) nach oben gedrückt. Die Bewegungen des Kolbens (11) werden durch die Nockenscheiben (13) bestimmt. Bei Stellung gemäß Figuren 3 und 3a sowie Figur 7 erreicht der Kolben (11) seinen oberen Totpunkt. Nach erfolgter Vorkompression drücken die Nockenscheiben (13) den Kompressionskolben (11) zu seinem unteren Totpunkt. Dies geschieht während der Bewegung des Vorkompressionskolbens I (1) von Stellung gemäß Fig. 9 bis Stellungen gemäß Figuren 4 und 5. (Fig. 9, 4, 5, 2, 2a). Der Kompressionskolben (11) beginnt nach Erreichen des oberen Totpunktes gemäß Stellung in Fig. 7 die gegenläufige komprimierende Bewegung schon, bevor der Vorkompressionskolben I (1) seine Stellung gemäß Fig. 9 erreicht hat.

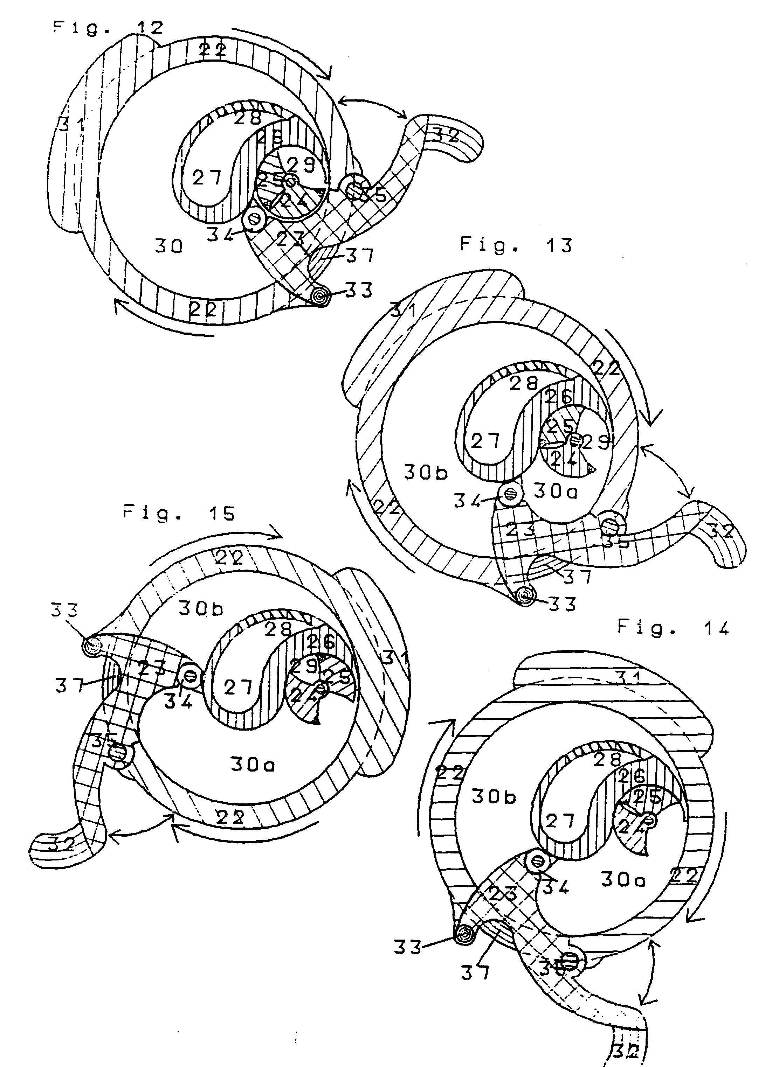

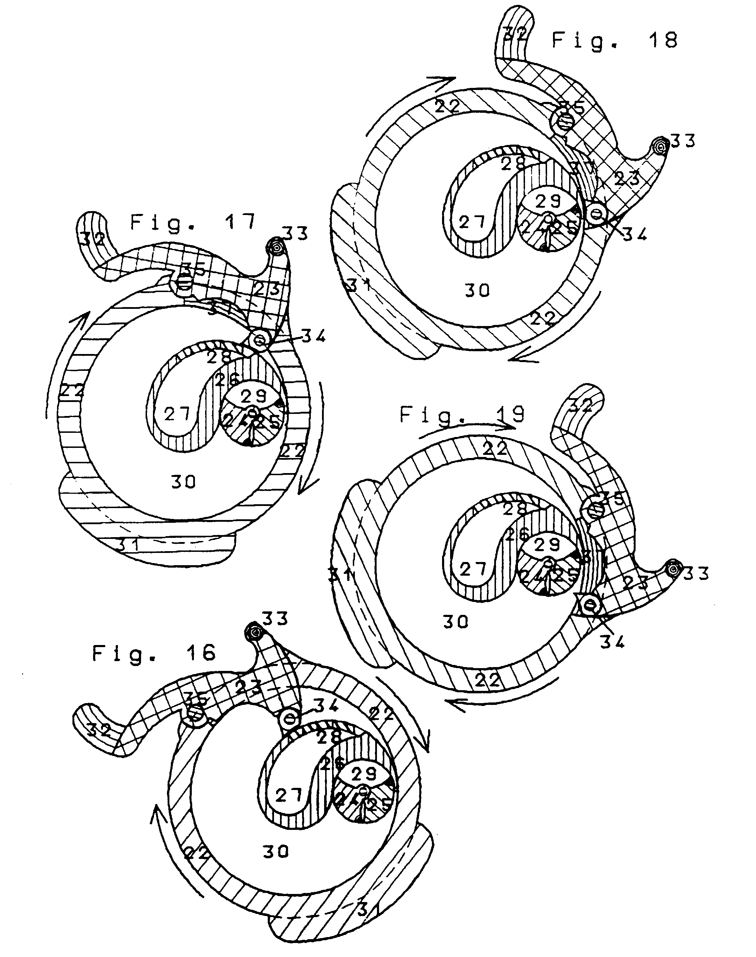

Gleichzeitig mit der Vorverdichtung der Kammern (18b und 19) wird die Zündungskammer (29) gefüllt beginnend etwa bei Stellung von Vorkompressionskolben I (1) gemäß Figuren 6 und 7 und Stellung des Schwenkkolbens (23) auf dem Expansionszylinder (22) gemäß Figuren 14, 15, 16. Dies wird möglich, weil der Steuerkolben I (24) durch den Steuerkolbenmechanismus in seiner in seiner Position gemäß Fig. 14 festgehalten wird und der in dieser Phase der Umdrehung frei bewegliche Steuerkolben II (25) durch den sich aufbauenden Gasdruck weiterbewegt wird (Fig. 15) bis zu seiner Stellung gem. Fig. 16, bei der das maximal mögliche Volumen der Zündungskammer (29) zwischen den beiden Steuerkolben 24 und 25) erreicht ist. Die von den Steuerkolben (24 und 25) bei Fig. 16 erreichte Stellung behalten sie bei bis kurz vor der Zündung des Gasgemisches gemäß Figuren 11 und 12. Die Zündungskompression des Gasgemischs in der Zündungskammer (29) ist erreicht, wenn die Nockenscheiben (13) den Kompressionskolben (11) zu seinemunteren Totpunkt gedrückt haben.

Nach Erreichen dieser Position des Kompressionskolbnen (11) ist der Kompressionszylinderraum (19) gänzlich zur Zündungskammer (29) hin abgeschlossen. (ABB. 3, Figuren 4 und 5 sowie ABB. 4, Fig. 11, ABB. 5, Figuren 11 und 13 sowie ABB. 6, Figuren 18 und 19).

### Zündung/Expansion/Arbeitstakt

Wenn der Kompressionskolben (11) seinen unteren Totpunkt erreicht, wird das endkomprimierte Gemisch in der Zündungskammer (29) gezündet und in dieser Phase durch den Steuerkolben (24) weiterbewegt. (ABB. 4, Fig. 11 und ABB. 5, Figurn 12 und 13). Jetzt kann das Arbeitsgas aus der Zündungskammer (29) entweichen und seine Arbeit leisten. Das entzündete Gemisch drückt in die Expansionskammer (30a) und dort den Schwenkkolben (23) und mit diesem den Expansionsrotationszylinder (22) in Uhrzeigerrichtung weiter (ABB. 5, Figuren 12 bis 15).

Gleichzeitig schiebt der Schwenkkolben (23) mit seiner Stirnseite die im Zylinderraum (30b) vom vorigen Expansionstakt noch vorhandenen Abgase durch die Abgasauslaßöffnungen (28) in die im Innern des Schneckengehäuses (26) liegende Auspuffkammer (27) und von dort weiter durch die Seitenwand (20) des Motorgehäuses und das Auspuffrohr (54) ins Freie. (ABBn 5 und 6, Figuren 12 bis 17). Geführt durch den Gleitschuh (32) entlang der Führungswand (42) und durch den Führungsstutzen (33) in der Führungsrinne (43) erreicht der Schwenkkolben um das Schneckengehäuse (26) und die Steuerkolben (24 und 25) herum wieder seine Position gemäß Fig. 11. Die Kipp- und Schwenkbewegungen werden dabei unterstützt durch die Spannfedern in der Schwenkkolbenachse (35) und dem Kippgleitschuh (34).

Da die Verweildauer der Brenngase in der Zündungskammer (29) eine völlige Verbrennung ermöglicht (Gleichraumverbrennung) und das expandierende Gasgemisch sich bis auf Umgebungsdruck entspannen kann, wird deutlich, daß mit dieser Technik die freiwerdende Energie sehr weitgehend in Drehmoment umgesetzt werden kann.

Bei Kolbenmotoren, deren Kolben sich zwischen festen Volumengrenzen mit äußerst kurzen Taktzeiten hin- und herbewegen, ist eine völlige Entspannung des Gasdrucks auf Umgebungsdruck nicht möglich.

Damit ist eine Umdrehung abgeschlossen, während der in diesen nacheinander angelegten Kammern (18a und b, 19, 29, 30a und b, 27) die Motorfunktionen von Ansaugen, Vorkompression, Endkompression. Zünden, Verbrennen, Expansion/Arbeitstakt und Gasausstoß gleichzeitig nebeneinander ablaufen.

### Steuermechanismen

Die hier beschriebene Technik der rotierenden und bewegten Zylinder- und Kolbeneinheiten erfordert eine rotationssymmetrische Steuerung. Diese Steuermechanismen werden in der erfindungsgemäßen Maschine wie folgt gelöst: Das Drehmoment des Expansionszylinders (22) wird durch den Außenzahnkranz (39) und die Zahnräder (40,53b) auf die Zahnradwelle (52) übertragen. Wie oben bereits beschrieben, wird der Vorkompressionskolben I (1) auf der Kolbenwelle (5) von der Zahnradwelle (52) über die Zahnräder (53a, 17) angetrieben. Der Vorkompressionskolben I (1) bewegt als seine Mitläufer den in den Laufrinnen (16) gebetteten Vorkompressionszylinderinnenläufer (3) und auf der Achse (6) den Vorkompressionskolben II (2).

Über die gleiche Zahnradübersetzung werden weiter durch das Zahnrad (15) die Nockenwelle (14) mit den Nockenscheiben (13) bewegt und damit die Hubbewegungen des Kompressionskolbens (11) erreicht.

Der Kompressionskolben (11) schließt in der Position seines unteren Totpunkts dicht ab mit dem Vorkompressionskolben I (1) einerseits und zur Steuerkolbenzylinderbuchse (38) hin mit den Steuerkolben I und II (24 und 25) andererseits. (ABB. 2, Figuren 2 und 2a, ABB. 3, Figuren 4 und 5).

Der dichte Abschluß des Kompressionskolbens (11) zur Zündungskammer (29) erlaubt es nun, die Steuerkolben (24 und 25) mit dem komprimierten Gasgemisch im Steuerkolbenzylinderraum (38) wie oben beschrieben weiterzudrehen.

Mit dieser Konstruktion ist ein deutlich verbesserter Wirkungsgrad gegenüber herkömmlichen Brennkraftmaschinen zu erwarten durch
- den Ablauf aller Motorfunktionen während einer Umdrehung,
- die günstigere Kraftübersetzung bedingt durch die spezifische Zylinder- und Kolbenkonfiguration (innenlaufende Funktionseinheiten für die Kompression und außenlaufende Funktionseinheiten für Verbrennung/Expansion) sowie die günstigen Übersetzungen bei den Kolben- und Zylinderbewegungen.
- die weitgehende Umsetzung der Energie der Brenngase in Drehmoment, da die Verweildauer dieser Gase in der Zündungskammer eine nahezu völlige Verbrennung erwarten läßt (Gleichraumverbrennung) und diese Gase auch länger entspannen und somit länger Arbeit leisten können.

Damit ergeben sich vorteilhafterweise
- eine wesentliche Reduzierung des Kraftstoffverbrauchs,
- minimale Motorgeräusche, da kein Nachbrennen der Auspuffgase,
- eine Minimierung der Schadstoffemissionen (abhängig vom Kraftstoff) und
- insgesamt eine Reduzierung der Umweltbelastung.

Eine Ausführung der erfindungsgemäßen Mehrkammerrotationskolbenbrennkraftmaschine ist in den Zeichnungen dargestellt. Darin zeigt: ABB. 1, Fig. 1 die schematische Darstellung der erfindungsgemäßen Maschine mittels eines Gesamtquerschnitts.

Jedoch sind die Zylinderbuchse (18) ohne die Kompressionskolben (1 und 2) und den Rotationsinnenzylinder (3) dargestellt, wie auch Zylinderbuchse (38) nicht mit den Steuerkolben (24 und 25) und der Rotationsaußenzylinder (22) ohne Schwenkkolben (23) gezeigt wird. In dieser Gesamtdarstellung wird dadurch die Anordnung der Kammern deutlicher sichtbar.

In ABB. 2, Figuren 2 und 2a und Figuren 3 und 3a sind Querschnitte durch die Vorkompressionszylinderbuchse (18) sowie Kompressionskolben (11) und Nockenscheiben (13) aufgezeigt.

Die Figuren 2 und 2a zeigen den Kompressionskolben (11) im unteren Totpunkt und die bewegten Teile im Vorkompressionszylinder.

Die Figuren 3 und 3a zeigen die bewegten Teile zueinander während der oberen Totpunktstellung des Kompressionskolbens (11).

In ABB. 3, Figuren 4 bis 9 sind die Stellungen von Vorkompressionskolben I und II (1 und 2) und Rotationszylinder/Innenläufer (3) sowie Kompressiosnkolben (11) in den Kammern (18) und (19) während einer Umdrehung wiedergegeben. ABB. 4, Figuren 10 und 11 sowie ABB. 5 und 6, Fig. 12 bis 19 zeigen die Stellungen von Expansionszylinder (22) und Schwenkkolben (23) während einer Umdrehung.

Abb. 7, Fig. 20 veranschaulicht die Lage von Vorkompressionszylinderraum (18) und insbesondere von Endkompressionszylinderraum (19) zur Zündungskammer (29), um an diesem Übergang den Strömungsweg der Gase durch die Maschine zu verdeutlichen.

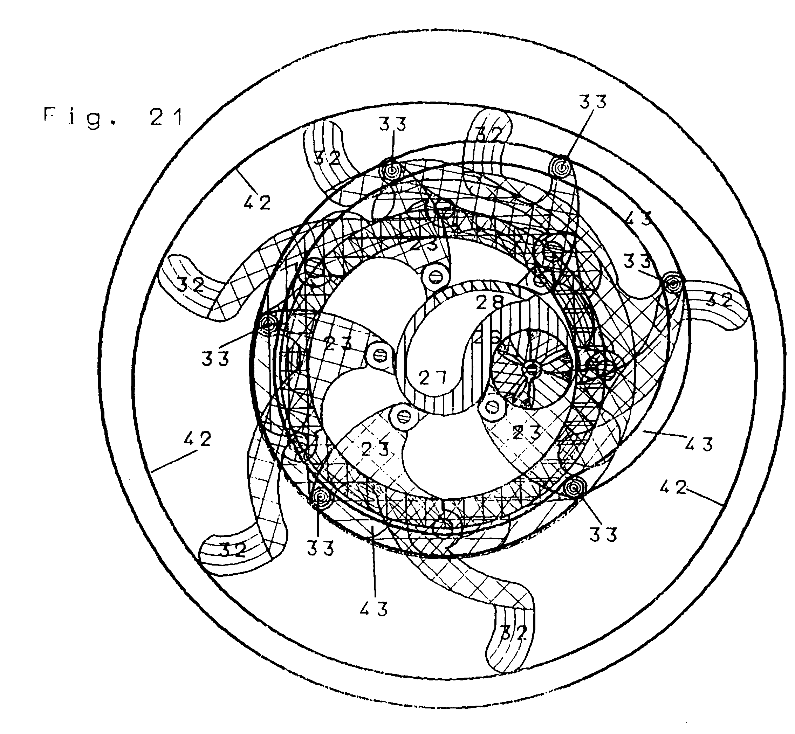

In ABB. 8, Fig. 21 ist ein Schnitt durch die Stellungen des rotierenden Expansionszylinders (22) und des Schwenkkolbens (23) während einer Umdrehung dargestellt. Dabei wird das Oberflächenprofil der Führungswand (42) sichtbar sowie dazu der Verlauf der Führungsrinne (43) für den Gleitstutzen (33). Im Zusammenwirken dieser Steuermechanismen wird ein gasdichtes Gleiten des Kippgleitschuhs (34) über die beiden Halbkreisprofile des Schneckengehäuses (26) erreicht.

### Beschriftung der Zeichnungen

- 1.: Vorkompressionskolben I
- 2.: Vorkompressionskolben II
- 3.: Vorkompressionsrotationszylinder/Innenläufer
- 4.: Vorkompressionszylinderflansch
- 5.: Welle von Vorkompressionskolben I
- 6.: Achse von Vorkompressionskolben II
- 7.: Kolbenwellenbolzen
- 8.: Zylindergleitschuh I
- 9.: Zylindergleitschuh II
- 10.: Gelenkbolzen von Zylindergleitschuh 8 und 9
- 11.: Kompressionskolben
- 12.: Brennstoffeinlaßöffnung
- 13.: Nockenscheibe
- 14.: Nockenwelle
- 15.: Nockenwellenzahnrad
- 16.: Laufrinne für Vorkompressionszylinderflansch 4
- 17.: Zahnrad der Vorkompressionskolbenwelle
- 18.: Vorkompressionszylinderbuchse / -kammer a + b
- 19.: Endkompressionszylinderkammer
- 20.: Motorgehäusewand
- 21.: Motorgehäusesockel
- 22.: Expansionsrotationszylinder/Außenläufer
- 23.: Schwenkkolben
- 24.: Steuerkolben I
- 25.: Steuerkolben II
- 26.: Auspuff- und Zündungskammerschneckengehäuse
- 27.: Auspuffkammer
- 28.: Abgasauslaßöffnungen
- 29.: Kompressions- und Zündungskammer
- 30.: Expansionskammer (a und b)
- 31.: Ausgleichsgewicht
- 32.: Führungsgleitschuh
- 33.: Führungsgleitstutzen
- 34.: Kippgleitschuh mit Spannfeder
- 35.: Schwenkkolbenachse mit Spannfeder
- 36.: Schwenkkolbenachsbolzen
- 37.: Zylinderflansch des Außenläufers 22
- 38.: Steuerkolbenzylinderbuchse
- 39.: Außenzahnkranz auf Expansionszylinder/Außenläufer 22
- 40.: Zahnrad
- 42.: Führungswand für Gleitschuh 32
- 43.: Führungsrinne für Gleitstutzen 33
- 52.: Zahnradwelle
- 53.: Zahnrad (a,b) auf Zahnradwelle 52
- 54.: Auspuffrohr
- 63.: Scheitelpunkt in Vorkompressionszylinderbuchse

## Patentansprüche

1. Mehrkammerrotationskolbenbrennkraftmaschine mit mehreren nacheinander angelegten Kammern, in denen alle Motorfunktionen bei einem kontinuierlichen Gasstrom während einer Umdrehung gleichzeitig nebeneinander ablaufen, gekennzeichnet durch einerseits innen rotierende und bewegte Zylinder und Kolben (1. 2. 3. 11) für die Funktionen Ansaugen, Vorkompression und Endkompression und andererseits außen rotierende und bewegte Zylinder und Kolben (22. 23) für die Funktionen Verbrennung, Expansion und Gasausstoß, welche Zylinder und Kolben durch Zahnradübersetzungen von einer zentralen Zahnradwelle rotationssymmetrisch gesteuert werden.

2. Mehrkammerrotationskolbenbrennkraftmaschine nach Anspruch 1 , dadurch gekennzeichnet, daß in einer Vorkompressionszylinderbuchse (18) durch einen innen rotierenden Doppel kolben (1 und 2) und einen Rotationszylinder (3) zwei in ihrem Volumen sich verändernde Kammern (18a und b) gebildet werden derart. daß eine in Drehrichtung vor dem Kolben (1) liegende Kammer (18b) bei jeder Umdrehung von ihrem vollen Volumen bis auf Null verkleinert wird und die in dieser Kammer enthaltenen Gasgemische dabei in die benachbarte Kammer (19) gedrückt werden und daß gleichzeitig eine hinter dem Kolben (2) liegende Kammer (18a) in dieser Drehphase von Null zum vollen Volumen vergrößert wird und infolge des entstehenden Unterdrucks in der Kammer (18a) das Frischgas durch die Einlaßöffnung (12) angesaugt wird

3. Mehrkammerrotationskolbenbrennkraftmaschine nach Anspruch 2, dadurch gekennzeichnet, daß Laufrinnen (16) in beiden flachen Seitenwänden der Vorkompressionszylinderbuchse (18) den Flanschen (4) eines Rotationszylinders (3), dessen Durchmesser kleiner ist als jener der Zylinderbuchse (18), ein Rundlaufbett bieten so, daß der Rotationszylinder (3) auf der einen Seite gasdicht mit der Rundung der Zylinderderbuchse (18) am Scheitelpunkt (63) abschließt und zur anderen Seite mit der Zylinderbuchse (18) eine sichelförmige Kammer (18a,b) bildet. daß die Enden des einseitig offenen Zylindermantels des Rotationszylinders (3) durch Zylindergleitschuhe (8,9) beweglich mit den Stirnseiten der Kompressionskolben (1,2) verbunden sind, daß diese Gleitschuhe (8+9) während der Kolben- und Zylinlderumdrehungen ein Auf- und Abgleiten der Zylinderenden auf den Kolbenstirnflächen erlauben. daß die beiden Kolben (1.2) während einer Umdrehung ihre unterschiedlichen Winkelstellungen zum Innenzylinder (3) durch ScherenbewegUngen zueinander ausgleichen können, daß der Vorkompressionskolben (1) fest auf einer Welle (5) sitzt, die durch den Kolbenwellenbolzen (7) im Zentrum der Vorkompressionszylinderbuchse (18) fixiert ist. daß auf der gleichen Achse (6) der Vorkompressionskolben (2) rotiert. daß der Vorkompressionskolben (1) durch die Zahnradübersetzungen über die Welle (5) angetrieben den Rotationszylinder (3) und den Vorkompressionskolben (2) als Mitläufer bewegen kann, daß die Vorkompressionsdoppelkolben (1,2) in jeder Stellung während einer Umdrehung mit der Zylinderbuchsenrundung (18) gasdicht abschließen

4. Mehrkammerrotationskolbenbrennkraftmaschine nach einem der Ansprüche 1 bis 3. dadurch gekennzeichnet, daß in der Kompressionskammer (19) der Kompressionskolben (11) während seiner Bewegung zum unteren Totpunkt das vorkomprimierte Gemisch in die direkt daneben liegende Zündungskammer (29) endkomprimiert und daß der Kompressionskolben (11) in seinem unteren Totpunkt die Kompressionskammer (19) gänzlich zur Zündungskammer (29) und zum Rotationskolben (1) und damit zur Vorkompressionskammer (18a,b) hin gasdicht abschließt.

5. Mehrkammerrotationskolbenbrennkraftmaschine nach einem der Ansprüche 1 bis 4, dadurch gekennzeichnet, daß in einer anschließenden Zylinderbuchse (38) zwei Rotationssteuvrkolben (24,25) zwischen sich die Kompressions- und Zündungskammer (29) bilden, in die hinein das Gasgeinisch vom Kompressionskolben (11) endkomrpimiert wird, daß die Steuerkolben (24,25) durch einen Steuermechanismus rotationssymmetrisch so gesteuert werden können, daß durch Weiterdrehen der Steuerkolben (24, 25) mittels dieses Steuermechanismus die Zündungskammer (29) sich zur Expansionskammer (30a) öffnet und so dem explodierenden Gasgemisch in der Expansionskammer (30a) den Arbeitsdruck auf den Schwenkkolben (23) und den Expansionsrotationszylintler (22) ermöglicht.

6. Mehrkammerrotationskolbenbrennkraftmaschine nach einem der Ansprüche 1 bis 5, dadurch gekennzeichnet, daß um ein Schneckengehäuse (26) herum der Expansionsrotationszylinder (22) und auf diesem sitzend der Schwenkkolben (23) rotiert, daß dieses Schneckengehäuse (26) die Zündungskammer (29) zwischen den Motorgehäusewänden (20) mit den beiden Steuerkolben (24,25) sowie die innen liegende Auspuffkammer (27) umfaßt, daß der Schwenkkolben (23) von den expandierenden Brenngasen vorwärts getrieben mit seinem Gleitschuh (34) gasdicht über die Halbkreisoberflächenprofile des Schneckengehäuses (26) gleitet, daß dieses gasdichte Gleiten über die beiden Halbkreisoberflächenprofile des Schneckengehäuses (26) von dem Führungsgleitschuh (32) und dem Kippgleitschuh (34) unterstützt wird, wobei der Führungsgleitschuh an der Führungswand (42) und der Führungsstutzen (33) in der Führungsrinne (43) geführt wird, daß die Schwenk- und Kippbewegungen des Schwenkkolbens (23) und des Kippgleitschuhes (34) durch Spannfedern in der Schwenkkolbenachse (35) und im Kippgleitschuh (34) unterstützt werden, daß der Schwenkkolben (23) während seiner Expansionsdrehbewegung gleichzeitig mit seiner Stirnseite die im Zylinderraum (30b) vom vorigen Expansionsvorgang noch vorhandenen Abgase über die Auspufföffnungen (28) in die Auspuffkammer (27) im Inneren des Schneckengehäuses (26) und von dort weiter durch das Auspuffrohr (54) entlüftet.

7. Mehrkammerrotationskolbenbrennkraftmaschine nach einem der Ansprüche 1 bis 6, dadurch gekennzeichnet, daß ein Außenzahnkranz (39) auf dem Expansionsrotationszylinder (22) das beim Arbeitstakt erzeugte Drehmoment über Zahnräder (40, 53b) auf die zentrale Zahnradwelle (52) überträgt.

## Claims

1. Multi-chamber rotary piston internal combustion engine with several chambers arranged one after the other in which all engine functions take place simultaneously, beside to one another, during one revolution, the gas stream being continuous, characterized, at the one hand, by cylinders and pistons (1, 2, 3, 11) rotating and being moved on the inside for the functions of intake, precompression and compression, and, at the other hand, cylinders and pistons (22, 23) rotating and being moved on the outside for the functions of ignition, combustion, expansion and gas discharge, said cylinders and pistons being controlled with rotation symmetry through gear wheel transmissions by a central gear wheel shaft.

2. Multi-chamber rotary piston internal combustion engine according to claim 1, characterized in that in a precompression cylinder bushing (18), two chambers (18a and b) which change in volume are formed by a double piston (1 and 2) which rotates on the inside, and a rotation cylinder (3), in such a manner that a chamber (18b) located in front of the piston (1) in the direction of rotation is reduced from its full volume to zero during each revolution, and the gas mixtures contained in this chamber are pressed into the adjacent chamber (19), and that at the same time, a chamber (18a) located behind the piston (2) is increased from zero to its full volume during this rotation phase, and that as a result of the partial vacuum being produced in the chamber (18a), the fresh gas is drawn in through the inlet opening (12).

3. Multi-chamber rotary piston internal combustion engine according to claim 2, characterized in that guide grooves (16) in both flat side walls of the precompression cylinder bushing (18) provide a rotation bed for the flanges (4) of a rotation cylinder (3), the diameter of which is less than that of the cylinder bushing (18), in such a manner that the rotation cylinder (3) forms a gas-tight seal with the rounded part of the cylinder bushing (18) at the peak (63) on the one side, and forms a sickle-shaped chamber (18a, b) with the cylinder bushing (18) towards the other side, that the ends of the cylinder mantle of the rotation cylinder (3), which is open at one end, are movably connected with the end faces of the compression pistons (1, 2) by means of cylinder sliding blocks (8, 9), that these sliding blocks (8 + 9) allow the cylinder ends to slide up and down on the end faces of the pistons during the piston and cylinder revolutions, that the two pistons (1, 2) can equalize their different angle positions relative to the inner cylinder (3) during a revolution by means of scissor-like movements relative to one another, that the precompression piston (1) is affixed on a shaft (5) which is fixed in place in the center of the precompression cylinder bushing (18) by means of the piston shaft pin (7), that the precompression piston (2) rotates on the same axle (6), that the precompression piston (1), driven via the shaft (5) by means of the gear transmissions, can move the rotation cylinder (3) and the precompression piston (2) as a follower, that the precompression double pistons (1, 2) form a gas-tight seal with the rounded part of the cylinder bushing (18) in every position during one revolution.

4. Multi-chamber rotary piston internal combustion engine according to one of claims 1 to 3, characterized in that in the compression chamber (19) the compression piston (11) endcompresses the precompressed mixture into the directly adjacent ignition chamber (29) during its movement to the bottom dead center, and that the compression piston (11) forms a completely gas-tight seal of the compression chamber (19) towards the ignition chamber (29) and towards the rotation piston (1), and thus towards the precompression chamber (18a, b) in its bottom dead center position.

5. Multi-chamber rotary piston internal combustion engine according to one of claims 1 to 4, characterized in that in a subsequent cylinder bushing (38), two rotation control pistons (24, 25) form the compression and ignition chamber (29) between them, into which the gas mixture is end-compressed by the compression piston (11), that the control pistons (24, 25) can be controlled by means of a control mechanism, with rotation symmetry, in such a way that when the control pistons (24, 25) continue to turn, the ignition chamber (29) opens up into the expansion chamber (30a) by means of this control mechanism, and thus allows the exploding gas mixture to exert working pressure on the pivot piston (23) and the expansion rotation cylinder (22) in the expansion chamber (30a).

6. Multi-chamber rotary piston internal combustion engine according to one of claims 1 to 5, characterized in that the expansion rotation cylinder (22) and sitting on this, the pivot piston (23) rotate around a screw housing (26), that this screw housing (26) surrounds the ignition chamber (29) between the engine housing wall (20) with the two control pistons (24, 25) as well as the exhaust chamber (27) located on the inside, that the pivot piston (23) glides over the semicircular surface profiles of the screw housing (26) with its sliding block (34), forming a gas tight seal, driven forward by the expanding combustion gases, that this gas-tight gliding over the two semicircular surface profiles of the screw housing (26) is supported by the guide sliding block (32) and the tilting sliding block (34), with the guide sliding block being guided on the guide wall (42) and the guide stub (33) being guided in the guide groove (43), that the pivoting and tilting movements of the pivot piston (23) and of the tilting sliding block (34) are supported by tension springs in the pivot piston axle (35) and in the tilting sliding block (34), that during its expansion rotation movement, the pivot piston (23) simultaneously ventilates with its end face the exhaust gases still present in the cylinder space (30b) from the previous expansion process via the exhaust openings (28) to the exhaust chamber (27) in the interior of the screw housing (26) and from there through the exhaust pipe (54).

7. Multi-chamber rotary piston internal combustion engine according to one of claims 1 to 6, characterized in that an outside gear crown (39) on the expansion rotation cylinder (22) transfers the torque generated during the work cycle to the central gear wheel shaft (52) via gear wheels (40, 53b).

## Revendications

1. Moteur à combustion interne, à pistons rotatifs et à chambres multiples, pourvu de plusieurs chambres disposées l'une après l'autre dans lesquelles toutes les fonctions du moteur s'effectuent simultanément, les unes après les autres, pendant une révolution, le courant de gaz étant continu, caractérisé, d'une part, par des cylindres et des pistons (1, 2, 3, 11) tournant et étant déplacés sur l'intérieur pour les fonctions d'admission, de précompression et de compression, et, d'autre part, par des cylindres et des pistons (22, 23) tournant et étant déplacés sur l'extérieur pour des fonctions d'allumage, de combustion, de détente et de décharge de gaz, lesdits cylindres et pistons étant commandés avec une symétrie de rotation, par l'intermédiaire de mécanismes de transmissions à roues d'engrenage, par un arbre à roue d'engrenage central.

2. Moteur à combustion interne, à pistons rotatifs et à chambres multiples, selon la revendication 1, caractérisé en ce que, dans une douille de cylindre de précompression (18), deux chambres (18a et 18b), dont le volume varie, sont formées par un double piston (1 et 2) qui tourne sur l'intérieur et par un cylindre rotatif (3), de telle manière qu'une chambre (18b) placée devant le piston (1) dans le sens de rotation est réduite en passant de son plein volume à un volume zéro à chaque révolution et que les mélanges de gaz contenus dans cette chambre sont comprimés dans la chambre adjacente (19), et en ce que, en même temps, une chambre (18a) placée derrière le piston (2) est augmentée pour passer de son volume zéro à son plein volume pendant cette phase de rotation, et en ce que, du fait du vide partiel produit dans la chambre (18a), le gaz neuf est aspiré par l'ouverture d'admission (12).

3. Moteur à combustion interne, à pistons rotatifs et à chambres multiples, selon la revendication 2, caractérisé en ce que des rainures de guidage (16) ménagées dans les deux parois latérales plates de la douille du cylindre de précompression (18) constituent un lit de rotation pour les brides (4) d'un cylindre rotatif (3), dont le diamètre est inférieur à celui de la douille du cylindre (18), de telle sorte que le cylindre rotatif (3) constitue une fermeture étanche aux gaz avec la partie arrondie de la douille du cylindre (18) au sommet (63) d'un côté, et forme une chambre (18a, 18b) en forme de croissant avec la douille de cylindre (18) en direction de l'autre côté, en ce que les extrémités de la paroi extérieure du cylindre rotatif (3), qui est ouvert à une extrémité, peuvent être déplacées en vue de leur raccordement avec les faces d'extrémité des pistons de compression (1, 2) au moyen des coulisseaux du cylindre (8, 9), en ce que ces coulisseaux du cylindre (8, 9) permettent aux extrémités du cylindre de coulisser vers le haut et vers le bas sur les faces d'extrémité des pistons pendant les révolutions du piston et du cylindre, en ce que les deux pistons (1, 2) peuvent égaliser leur positions d'angles différentes par rapport au cylindre intérieur (3), pendant une révolution, au moyen de mouvements de type ciseaux l'un par rapport à l'autre, en ce que le piston de précompression (1) est fixé sur un arbre (5) qui est fixe en position au centre de la douille du cylindre de précompression (18) au moyen de la tige de l'arbre de piston (7), en ce que le piston de précompression (2) tourne sur le même axe (6), en ce que le piston de précompression (1), entraîné via l'arbre (5) au moyen des transmissions par engrenages, peut déplacer le cylindre rotatif (3) et le piston de précompression (2) comme un ensemble suiveur, en ce que les doubles pistons à précompression (1, 2) forment un dispositif d'étanchéité aux gaz avec la partie arrondie de la douille de cylindre (18) dans chaque position pendant une révolution.

4. Moteur à combustion interne, à pistons rotatifs et à chambres multiples, selon l'une des revendications 1 à 3, caractérisé en ce que, dans la chambre de compression (19), le piston de compression (11) comprime en extrémité le mélange précomprimé jusque dans la chambre d'allumage (29) directement adjacente pendant son déplacement jusqu'au point mort inférieur, et en ce que le piston de compression (11) forme un dispositif d'étanchéité complet aux gaz de la chambre de compression (19), en direction de la chambre d'allumage (29) et en direction du piston de rotation (1), et ainsi en direction de la chambre de précompression (18a, 18b) dans son point mort inférieur.

5. Moteur à combustion interne, à pistons rotatifs et à chambres multiples, selon l'une quelconque des revendications 1 à 4, caractérisé en ce que, dans une douille de cylindre suivante (38), deux pistons de commande de rotation (24, 25) forment la chambre de compression et d'allumage (29) entre eux, dans laquelle le mélange de gaz est comprimé en extrémité par le piston de compression (11), en ce que les pistons de commande (24, 25) peuvent être commandés au moyens d'un mécanisme de commande, avec une symétrie de rotation, de telle sorte que lorsque les pistons de commande (24, 25) continuent de tourner, la chambre d'allumage (29) s'ouvre dans la chambre de détente (30a) au moyen de ce mécanisme de commande, et permet ainsi au mélange de gaz en combustion d'exercer une pression de travail sur le piston à pivot (23) et sur le cylindre rotatif de détente (22) dans la chambre de détente (30a).

6. Moteur à combustion interne, à pistons rotatifs et à chambres multiples, selon l'une quelconque des revendications 1 à 5, caractérisé en ce que le cylindre rotatif de détente (22) et, placé sur ce dernier, le piston à pivot (23), tournent autour d'un carter à vis (26), en ce que ce carter à vis (26) entoure la chambre d'allumage (29) entre la paroi du carter du moteur (20) avec les deux pistons de commande (24, 25) ainsi que la chambre d'échappement (27) placée sur l'intérieur, en ce que le piston à pivot (23) coulisse sur les profils de la surface semi-circulaire du carter à vis (26) avec ses blocs de coulissement (34), formant un dispositif de fermeture étanche aux gaz, entraîné vers l'avant par les gaz de combustion de détente, en ce que ce glissement étanche aux gaz sur les deux profiles de surface semi-circulaires du carter à vis (26) est supporté par le bloc de coulissement de guidage (32) et le bloc de coulissement basculant (34), le bloc de coulissement de guidage étant guidé sur la paroi de guidage (42) et la tige de guidage (33) étant guidée dans la rainure de guidage (43), en ce que les mouvements de pivotement et de basculement du piston à pivot (23) et du bloc de coulissement oscillant (34) sont supportés par des ressorts de tension dans l'axe du piston à pivot (35) et dans le bloc de coulissement oscillant (34), et en ce que, pendant son mouvement de rotation de détente, le piston à pivot (23) ventile simultanément, avec sa face d'extrémité, les gaz d'échappement encore présents dans l'espace du cylindre (30b) depuis le précédent processus de détente, via les ouvertures d'échappement (28), vers la chambre d'échappement (27) dans l'intérieur du carter à vis (26) et, à partir de là, dans le tuyau d'échappement (54).

7. Moteur à combustion interne, à pistons rotatifs et à chambres multiples, selon l'une quelconque des revendications 1 à 6, caractérisé en ce qu'une couronne d'engrenage extérieure (39) sur le cylindre de rotation de détente (22) transfère le couple généré pendant le cycle de travail vers l'arbre de la roue d'engrenage centrale (52) via les roues d'engrenage (40, 53b).
